(19) Europäisches Patentamt
European Patent Office
Office européen des brevets

(11) **EP 1 919 753 B1**

(12) **EUROPÄISCHE PATENTSCHRIFT**

(45) Veröffentlichungstag und Bekanntmachung des Hinweises auf die Patenterteilung:
**03.10.2012 Patentblatt 2012/40**

(21) Anmeldenummer: 06777599.9

(22) Anmeldetag: **06.07.2006**

(51) Int Cl.:
*B60W 30/18* (2012.01)    *B60T 13/58* (2006.01)
*B60T 1/10* (2006.01)    *B60T 8/42* (2006.01)
*B60W 10/08* (2006.01)    *B60W 20/00* (2006.01)
*B60K 6/48* (2007.10)    *B60W 10/184* (2012.01)

(86) Internationale Anmeldenummer:
**PCT/EP2006/063932**

(87) Internationale Veröffentlichungsnummer:
**WO 2007/020130 (22.02.2007 Gazette 2007/08)**

(54) **REKUPERATION VON ENERGIE BEI EINEM HYBRID-FAHRZEUG MIT EINER HYDRAULISCHEN ODER PNEUMATISCHEN BREMSANLAGE**

RECOVERY OF ENERGY IN A HYBRID VEHICLE COMPRISING A HYDRAULIC OR PNEUMATIC BRAKING SYSTEM

RECUPERATION D'ENERGIE DANS UN VEHICULE HYBRIDE EQUIPE D'UN SYSTEME DE FREINAGE HYDRAULIQUE OU PNEUMATIQUE

(84) Benannte Vertragsstaaten:
**DE FR GB IT**

(30) Priorität: **19.08.2005   DE 102005039314**

(43) Veröffentlichungstag der Anmeldung:
**14.05.2008   Patentblatt 2008/20**

(73) Patentinhaber: **ROBERT BOSCH GMBH**
**70442 Stuttgart (DE)**

(72) Erfinder:
• **BROECKEL, Friedhelm**
**71679 Asperg (DE)**
• **TOST, Andreas**
**74382 Neckarwestheim (DE)**

(56) Entgegenhaltungen:
WO-A-2004/101308    DE-A1- 19 604 134
DE-A1- 19 810 656    DE-A1- 19 909 809

**Beschreibung**

Die Erfindung betrifft eine Vorrichtung zu Rückgewinnung (Rekuperation) von Energie bei einem Bremsvorgang eines Hybrid-Fahrzeugs gemäß dem Oberbegriff des Patentanspruchs 1.

In Hybrid-Fahrzeugen wird die bei einem Verzögerungsvorgang frei werdende kinetische Energie üblicherweise in elektrische Energie gewandelt und im Bordnetz gespeichert. Bekannte Rekuperations-Systeme hierzu den elektrischen Antrieb als Generator. Der Generator erzeugt dabei ein Schleppmoment, das zur Verzögerung des Fahrzeugs beiträgt. Die so gewonnene elektrische Energie kann in anderen Fahrsituationen entweder zum Antrieb des Fahrzeugs oder zur Versorgung elektrischer Verbraucher genutzt werden. Der Wirkungsgrad des Fahrzeugs kann dadurch erheblich verbessert werden.

Bekannte Rekuperations-Systeme wie z.B. WO 2004 1013 08 A oder DE 19604 134 A1 sind derart ausgelegt, dass der größte Anteil der Fahrzeug-Verzögerung von der Betriebsbremse und nur ein kleiner (vom Bordnetz-Zustand abhängiger) Anteil vom Generator bewirkt wird. Dies hat den wesentlichen Nachteil, dass die vom Generator maximal erzeugbare elektrische Leistung meist nicht voll ausgenutzt werden kann.

Es ist daher die Aufgabe der vorliegenden Erfindung, die vom Generator erzeugte elektrische Leistung zu optimieren und somit den Gesamt-Wirkungsgrad des Fahrzeugs weiter zu erhöhen.

Gelöst wird diese Aufgabe gemäß der Erfindung durch die im Patentanspruch 1 angegebenen Merkmale

Ein wesentlicher Gedanke der Erfindung besteht darin, den Fahrer-Bremswunsch (die gewünschte Gesamt-Verzögerung) zu erfassen, die von der elektrischen Maschine bewirkbare Fahrzeug-Verzögerung vorzugsweise unter Berücksichtigung des energetischen Bordnetzzustands zu ermitteln und den vom Fahrer ausgeübten Bremsdruck in Abhängigkeit vom Verzögerungsanteil der elektrischen Maschine entsprechend zu reduzieren, so dass insgesamt die vom Fahrer gewünschte Verzögerung ausgeübt wird. Der Fahrer-Bremsdruck wird hierzu mittels eines geeigneten Stellglieds (Druckminderungseinheit) entsprechend reduziert oder gegebenenfalls auch vollständig abgebaut. Dies hat den wesentlichen Vorteil, dass die elektrische Maschine bei einem Bremsvorgang in einem Bereich maximaler Erzeugung elektrischer Energie betrieben und somit ein maximaler Anteil der kinetischen Energie des Fahrzeugs zurück gewonnen werden kann.

Unter der Bezeichnung "Fahrzeug-Verzögerung" sollen hier sowohl eine Verzögerung [m/s2] als auch proportionale Größen, wie z.B. die vom Generator erzeugte elektrische Leistung, ein Schleppmoment des Generators, etc. verstanden werden.

Die von der elektrischen Maschine erzeugbare Fahrzeug-Verzögerung ist u.a. davon abhängig, wie viel elektrische Leistung das Bordnetz noch aufnehmen kann. Diese Information kann z.B. von einem Energiemanagement-Steuergerät erhalten und bei der Bestimmung des Verzögerungsanteils der elektrischen Maschine berücksichtigt werden.

Sofern mehrere solcher Ventile verbaut sind, sind diese erfindungsgemäß nicht in sämtlichen Bremsleitungen enthalten, sondern nur in den Bremsleitungen der angetriebenen Räder angeordnet.

Der am Rad wirkende Bremsdruck wird vorzugsweise mittels eines Reglers auf einen Sollwert geregelt, wobei das Ventil das Stellglied der Regelung bildet. Das Bremsen-Steuergerät umfasst in diesem Fall einen geeigneten Regelalgorithmus.

Bei einem Fahrzeug mit Schlupfregelung, wie z.B. ABS oder ESP, bei dem die Bremsflüssigkeit den Radbremsen über so genannte Einlassventile zugeführt wird, können diese Einlassventile im Rekuperationsbetrieb als Druckminderungsventile genutzt werden. Ein zusätzliches Ventil ist in diesem Fall nicht erforderlich.

Eine erfindungsgemäße Bremsanlage zur Rekuperation von Energie umfasst erfindungsgemäß wenigstens eine Elektronik, wie z.B. ein Steuergerät, die die Höhe des Fahrer-Verzögerungswunsches erfasst und eine von der elektrischen Maschine erzeugbare Fahrzeugverzögerung ermittelt, sowie eine Druckminderungseinheit, die in Abhängigkeit vom Gesamt-Verzögerungswunsch und vom Verzögerungsanteil der elektrischen Maschine von der Elektronik angesteuert wird.

Die Höhe des Fahrer-Bremswunsches kann beispielsweise von einem Bremswertgeber oder einem Bremsdrucksensor (z.B: dem so genannten Vordrucksensor) erhalten werden.

Die Erfindung wird nachstehend anhand der beigefügten Zeichnungen beispielhaft näher erläutert. Es zeigen:

Fig. 1 eine schematische Darstellung einer Kfz-Bremsanlage in II-Kreisaufteilung mit einem erfindungsgemäßen Druckminderungsventil;

Fig. 2 eine schematische Darstellung einer Kfz-Bremsanlage in X-Kreisaufteilung mit mehreren erfindungsgemäßen Druckminderungsventilen;

Fig. 3 eine schematische Darstellung einer Kfz-Bremsanlage in II-Kreisaufteilung, die für eine Fahrdynamikregelung ausgelegt ist und mehrere erfindungsgemäße Druckminderungsventile umfasst;

Fig. 4 eine schematische Darstellung einer Kfz-Bremsanlage in X-Kreisaufteilung, die für eine Fahrdynamikregelung ausgelegt ist und mehrere Druckminderungsventile aufweist; und

Fig. 5 ein Flussdiagramm zur Darstellung eines Verfahrens zur Rekuperation von Energie gemäß einer Ausführungsform der Erfindung.

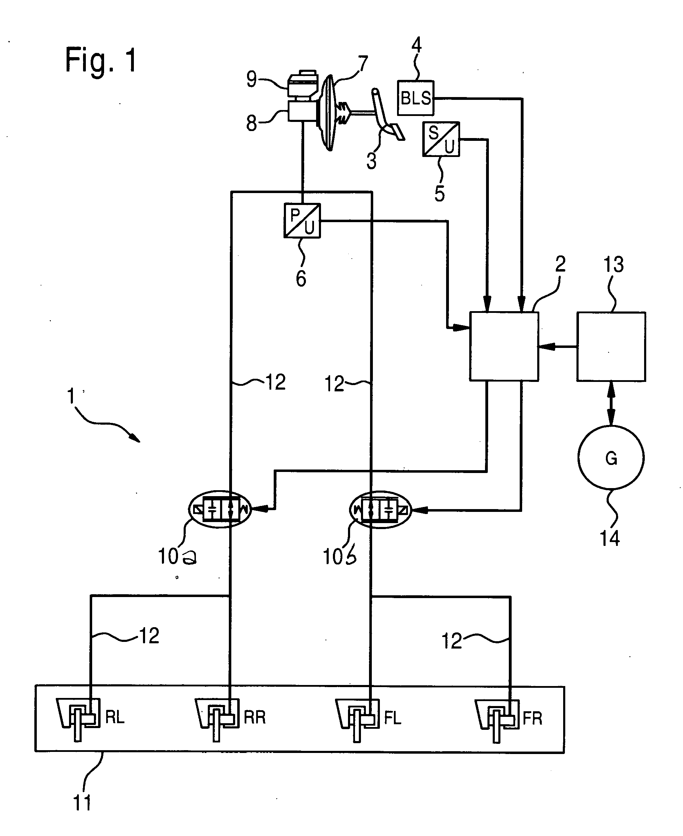

Fig. 1 zeigt eine hydraulische Kfz-Bremsanlage in II-Kreisaufteilung, deren konstruktiver Aufbau im Wesentlichen aus dem Stand der Technik bekannt ist. Die Bremsanlage 1 umfasst in bekannter Weise ein Fuß-Bremspedal 3, einen Bremskraftverstärker 7 mit einem Haupt-Bremszylinder 8 auf dem ein Bremsflüssigkeitsbehälter 9 angeordnet ist. Der Bremskraftverstärker 7 verstärkt die vom Fahrer am Fuß-Bremspedal 3 ausgeübte Bremskraft und erzeugt einen Bremsdruck, der über Bremsleitungen 12 zu den Radbremsen 11 geleitet wird.

Im Unterschied zu den bekannten Bremsanlagen umfasst diese Bremsanlage ein zusätzliches Ventil 10, das in der Haupt-Bremsleitung 12 der angetriebenen Achse angeordnet ist und dazu dient, den vom Fahrer ausgeübten Bremsdruck zu reduzieren. (Hier sind zwei Ventile 10 dargestellt, wobei im Falle eines Hinterradantriebs nur das linke, im Falle eines Vorderradantriebs nur das rechte und im Falle eines Allradantriebs beide Ventile 10 verbaut wären). Das bzw. die Ventile 10 sind an einem Steuergerät 2 angeschlossen und werden von diesem in Abhängigkeit vom Fahrer-Verzögerungswunsch und dem Verzögerungsanteil der elektrischen Maschine 14 angesteuert.

Im Rekuperationsbetrieb wird die elektrische Maschine 14 als Generator betrieben. Dabei erzeugt sie ein Schleppmoment, das zur Verzögerung des Fahrzeugs beiträgt. Grundsätzlich wird versucht, einen möglichst hohen Anteil der Gesamtverzögerung durch den Generator 14 zu erzeugen, um ein Maximum an Energie zurück zu gewinnen. Der darüber hinausgehende Anteil, sofern vorhanden, wird dann von den Betriebsbremsen 11 bewirkt.

Der Generatorbetrieb wird durch die Aufnahmefähigkeit des elektrischen Bordnetzes begrenzt. Wenn das elektrische Bordnetz nur wenig oder gar keine elektrische Energie mehr aufnehmen kann, muss der Verzögerungsanteil der elektrischen Maschine 14 entsprechend reduziert und der Anteil der Betriebsbremsen erhöht werden.

Die vom Fahrer gewünschte Verzögerung kann beispielsweise über einen Bremswertgeber, wie z.B. einen Wegsensor 5, oder mittels eines in einem Bremskreis angeordneten Drucksensors 6 (z.B. dem so genannten Vordrucksensor) gemessen werden. Die Information über die vom Generator 14 erzeugbare elektrische Leistung erhält das Steuergerät 2 z.B. von einem Hybrid-Steuergerät 13, das den energetischen Zustand bzw. die Aufnahmefähigkeit des Bordnetzes bestimmt. Die Steuergeräte 2 und 13 können auch in einem einzigen Steuergerät zusammengefasst sein.

Der Verzögerungsanteil der Betriebsbremsen 11 ergibt sich aus dem Gesamt-Verzögerungswunsch $verz_F$ und dem Anteil $verz_H$ des Generators 14. Dabei gilt:

$$verz_B = verz_F - verz_H$$

Um diesen Wert einzustellen, werden das bzw. die Druckminderungsventile 10 vom Steuergerät 2 derart angesteuert (oder geregelt), dass sich der vom Fahrer vorgegebene Bremsdruck ($p_{vor}$) entsprechend reduziert.

Die Ansteuerung der Ventile 10 erfolgt vorzugsweise getaktet. Dadurch kann eine sehr einfache und kostengünstige Druckminderung realisiert werden.

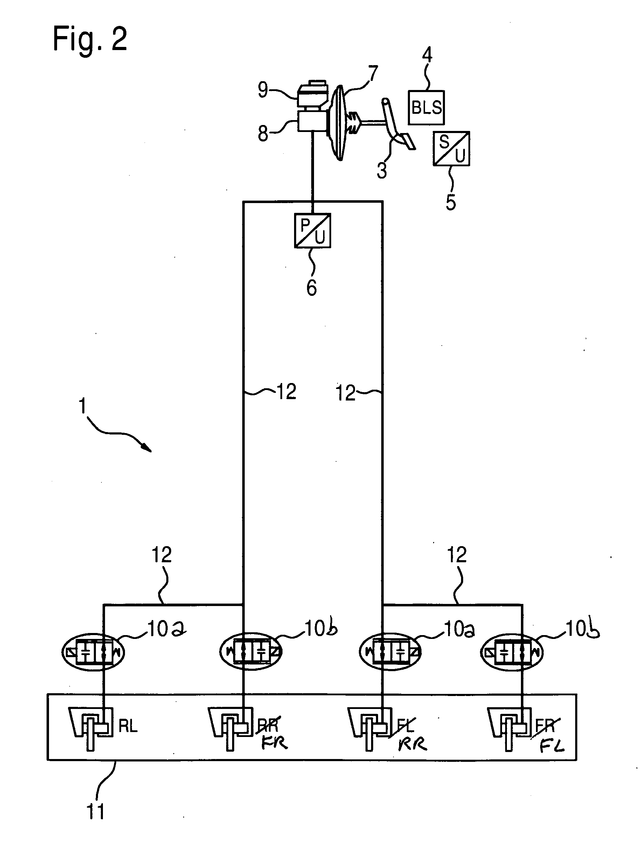

Fig. 2 zeigt ein hydraulisches Bremssystem in X-Kreisaufteilung mit mehreren zusätzlichen Druckminderungsventilen 10. Gleiche Elemente sind dabei mit gleichen Bezugszeichen wie in Fig. 1 bezeichnet. Die äußere elektrische Beschaltung ist im Wesentlichen identisch wie in Fig. 1, wurde jedoch aus Gründen der Übersichtlichkeit weggelassen.

Im Unterschied zu Fig. 1 ist hier in jeder Bremsleitung 12 der angetriebenen Räder ein separates Ventil 10 vorgesehen. Bei einem Fahrzeug mit Vorderradantrieb befinden sich die Ventile vorzugsweise ausschließlich in den Bremsleitungen 12 der Vorderräder (in der Figur die beiden rechten Ventile), bei einem Fahrzeug mit Hinterradantrieb in den Bremsleitungen 12 der Hinterräder (die beiden linken Ventile) und bei einem Fahrzeug mit Allradantrieb in den Bremsleitungen 12 aller Räder (wie gezeigt).

Bei einem Bremsvorgang, bei dem eine zusätzliche Verzögerung durch die Betriebsbremsen 11 erforderlich ist, werden die Ventile 10 wie vorstehend bzgl. Fig. 1 beschrieben angesteuert. Der an den Bremsen 11 wirkende Bremsdruck wird vorzugsweise auf einen Sollwert geregelt.

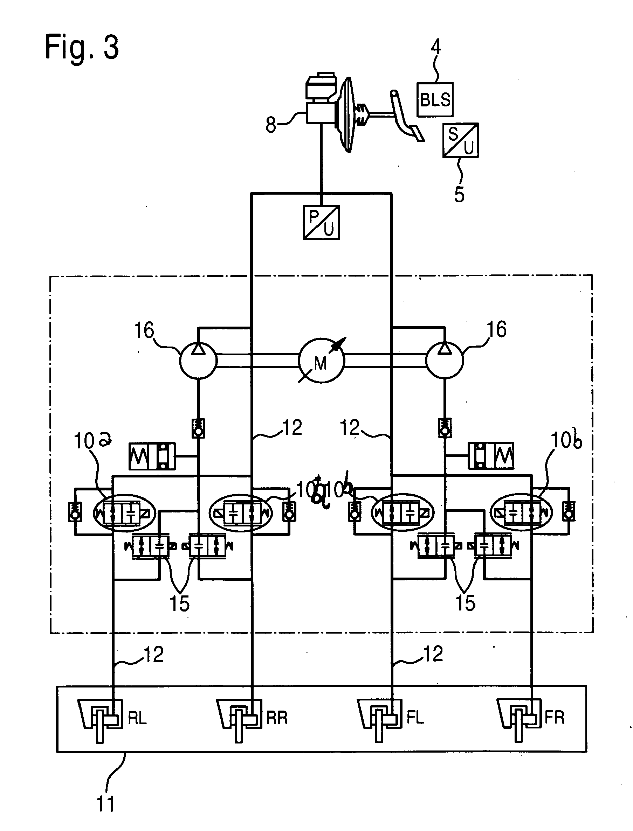

Fig. 3 zeigt eine Kfz-Bremsanlage in II-Bremsaufteilung, die für eine Bremskraftregelung im Rahmen eines ABS oder ESP-Systems ausgelegt ist. Die äußere elektrische Beschaltung ist hier weggelassen. Die dargestellte, aus dem Stand der Technik bekannte Bremsanlage umfasst für jede der Radbremsen 11 ein eigenes Einlassventil 10, mit dem der Zufluss von Bremsflüssigkeit zu den Radbremsen gesteuert wird.

Bei einem Regelvorgang der Fahrdynamikregelung wird der Bremsdruck durch Öffnen von Auslassventilen 15 reduziert und durch Ansteuerung einer Hydraulikpumpe 16 alternierend neu aufgebaut. Bei einem Bremsvorgang, der unterhalb der Regelschwelle des Fahrdynamikregelungssystems liegt, können diese Einlassventile 10 als Druckminderungsventile im Sinne der Erfindung genutzt werden. Dabei werden die Ventile 10 je nach Bedarf mehr oder weniger geschlossen, um den an den Bremsen 11 wirkenden Bremsdruck entsprechend zu mindern. Zusätzliche Druckminderungsventile sind in diesem Fall nicht notwendig.

Bei einem Fahrzeug mit Heckantrieb werden vorzugsweise nur die beiden linken Einlassventile 10, bei einem Fahrzeug mit Frontantrieb die beiden rechten Einlassventile 10 und bei einem Fahrzeug mit Allradantrieb alle vier Einlassventile 10 im Rekuperationsbetrieb genutzt.

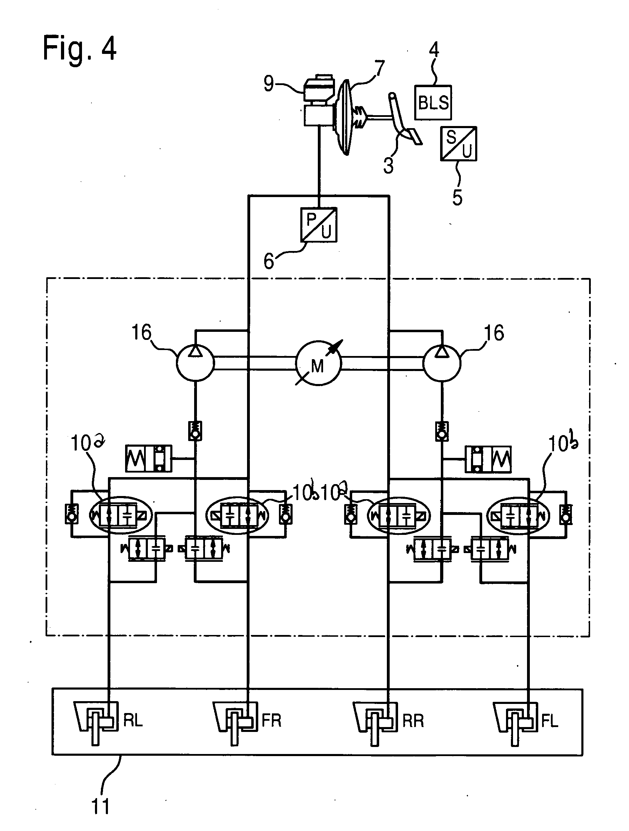

Fig. 4 zeigt eine Kfz-Bremsanlage in X-Kreisaufteilung, die ebenfalls für eine Fahrdynamikregelung ausgelegt ist. Aufgrund der unterschiedlichen Kreisaufteilung werden hier bei einem Fahrzeug mit Heckantrieb das erste und dritte Ventil 10 (von links), und bei einem Fahrzeug mit Frontantrieb das zweite und vierte Ventil 10 (von links) zur Druckminderung genutzt.

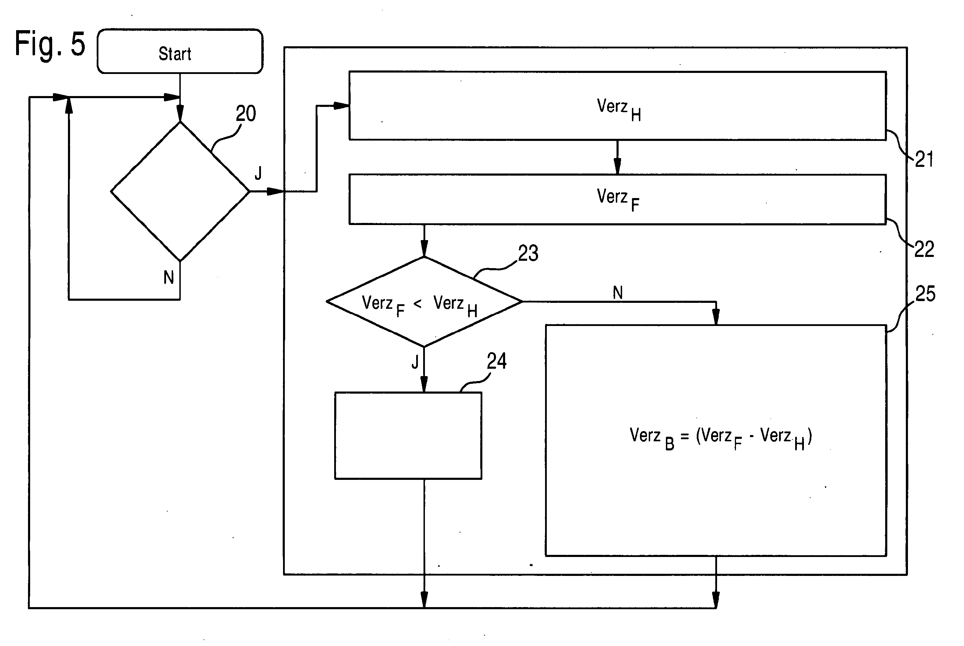

Fig. 5 zeigt ein Flussdiagramm, in dem die wesentlichen Verfahrensschritte im Rekuperationsbetrieb dargestellt sind. Dabei wird in Schritt 20 zunächst überprüft, ob der Fahrer das Fuß-Bremspedal 3 betätigt. Dies kann beispielsweise durch Überwachung des Bremslichtschalters 4 erfolgen. Im Falle einer Bremsbetätigung wird in Schritt 21 die von der elektrischen Maschine 14 aufbringbare Verzögerung bzw. eine dazu proportionale Größe, wie z.B. ein Schleppmoment ermittelt. Diese Information kann beispielsweise von einem Hybrid-Steuergerät 13 erzeugt werden, das den Generator- und den Bordnetzzustand überwacht.

In Schritt 22 wird die vom Fahrer gewünschte Verzögerung $verz_F$ oder ein hierzu proportionaler Wert, wie z.B. ein Bremsmoment berechnet. Der Fahrerwunsch kann z.B. mittels eines Pedalwertgebers 5 oder eines Drucksensors 6 mit Hilfe einer Bremsenkennlinie bestimmt werden. In Schritt 23 wird überprüft, ob die vom Fahrer gewünschte Verzögerung $verz_F$ kleiner ist als die von der elektrischen Maschine 14 erzeugbare Verzögerung $verz_H$. Sofern die Verzögerung $verz_H$ der elektrischen Maschine für den Bremsvorgang ausreicht ($verz_H > verz_F$), wird das bzw. die Druckminderungsventile 10 in Schritt 24 vollständig geschlossen und die Radbremsen 11 der angetriebenen Räder vom Bremsdruck abgekoppelt. Die erforderliche Bremswirkung wird in diesem Fall durch die elektrische Maschine 14 als auch durch diejenigen Radbremsen 11 der anderen Räder bewirkt, die nicht vom Bremsdruck abgekoppelt sind.

Wenn die vom Fahrer gewünschte Verzögerung $verz_F$ dagegen größer ist als die Verzögerung $verz_H$ der elektrischen Maschine, wird in Schritt 25 eine Restverzögerung $verz_B$ ermittelt, die auch von den Radbremsen 11 der angetriebenen Achse bewirkt werden muss. Dabei gilt: $verz_B = verz_F - verz_H$. Bei bekanntem Brems-Wirkkoeffizienten cp und einem bekannten Drosselfaktor der Druckminderungsventile 10 kann eine entsprechende Druckregelung durchgeführt werden. Der an den Radbremsen herrschende tatsächliche Bremsdruck wird dabei vorzugsweise mittels Drucksensoren gemessen und in die Regelung zurück geführt.

Bezugszeichenliste

| | |
|---|---|
| 1 | Bremsanlage |
| 2 | Steuergerät |
| 3 | Fuß-Bremspedal |
| 4 | Bremslichtschalter |
| 5 | Bremswertgeber |
| 6 | Drucksensor |
| 7 | Bremskraftverstärker |
| 8 | Hauptbremszylinder |
| 9 | Bremsflüssigkeitsbehälter |
| 10 | Druckminderungsventile |
| 11 | Radbremsen |
| 12 | Bremsleitungen |
| 13 | Hybrid-Steuergerät |
| 14 | elektrische Maschine |
| 15 | Auslassventil |
| 16 | Hydraulikpumpen |
| 20-25 | Verfahrensschritte |

## Patentansprüche

1. Vorrichtung zur Rekuperation von Energie bei einem Bremsvorgang eines Hybrid-Fahrzeugs, das einen Verbrennungsmotor und einen elektrischen Antrieb (14), sowie eine hydraulische oder pneumatische Bremsanlage (1) umfasst, <u>mit</u> einer Sensorik (5,6) zum Bestimmen eines Fahrer-Bremswunsches ($p_{vor}$), einer Elektronik (2) zum Bestimmen einer von der elektrischen Maschine (14) erzeugbaren Verzögerung ($verz_H$), und einer Druckminderungseinheit (10a,10b), die in Abhängigkeit von der gewünschten Gesamt-Verzögerung und dem Verzögerungsanteil ($verz_H$) der elektrischen Maschine (14) ansteuert wird, um den an einer Radbremse (11) wirkenden Bremsdruck zu mindern, wobei die Druckminderungseinheit ein in einer Bremsleitung (12) angeordnetes Ventil (10a, 10b) ist, **dadurch gekennzeichnet, dass** das Ventil (10a,10b) nur in den Bremsleitungen (12) der angetriebenen Räder angeordnet ist.

## Claims

1. Device for recuperating energy in a braking process of a hybrid vehicle which comprises an internal combustion engine and an electric drive (14) as well as a hydraulic or pneumatic brake system (1), having a sensor system (5, 6) for determining a driver's braking request ($p_{vor}$), an electronic system (2) for determining a deceleration ($verz_H$) which can be generated by the electric machine (14), and a pressure-reducing unit (10a, 10b) which is actuated as a function of the desired overall deceleration and the deceleration component ($verz_H$) of the electric machine (14) in order to reduce the brake pressure acting at a wheel brake (11), wherein the pressure-reducing unit is a valve (10a, 10b) which is arranged in a brake line (12), **characterized in that** the valve (10a, 10b) is arranged only in the brake lines (12) of the driven wheels.

## Revendications

1. Dispositif pour la récupération d'énergie lors d'une opération de freinage d'un véhicule hybride, qui comprend un moteur à combustion interne et un entraînement électrique (14), ainsi qu'une installation de freinage (1) hydraulique ou pneumatique, avec un système de capteurs (5, 6) pour déterminer un souhait de freinage du conducteur ($p_{vor}$), un système électronique (2) pour déterminer un ralentissement ($verz_H$) pouvant être produit par la machine électrique (14), et une unité de réduction de pression (10a, 10b) qui est commandée en fonction du ralentissement total souhaité et de la proportion de ralentissement ($verz_H$) de la machine électrique (14), afin de réduire la pression de freinage agissant au niveau d'un frein de roue (11), l'unité de réduction de pression étant une soupape (10a, 10b) disposée dans une conduite de frein (12), **caractérisé en ce que** la soupape (10a, 10b) est disposée seulement dans les conduites de frein (12) des roues menées.

# Fig. 1

# Fig. 2

# Fig. 3

Fig. 4

Fig. 5

Start

20

J

N

Verz$_H$

21

Verz$_F$

22

25

23

Verz$_F$ < Verz$_H$

N

J

24

Verz$_B$ = (Verz$_F$ - Verz$_H$)

**EP 1 919 753 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004101308 A
- DE 19604134 A1